# EUROPEAN PATENT APPLICATION

(11) **EP 4 799 930 A1**
(43) Date of publication of application: **02.09.2026**
(21) Application number: 25161037.4
(22) Date of filing: 28.02.2025
(51) Int. Cl.: B64D 11/00, B64D 11/06, G01S 17/88, G06N 3/02, G06N 20/00

(54) **CABIN MANAGEMENT DEVICE FOR AN AIRCRAFT CABIN SPACE**

(71) Applicant: AIRBUS Operations GmbH, 21129 Hamburg (DE)
(72) Inventor: Schleef, Jan-Philipp, 21129 Hamburg (DE); Netzler, Michael, 21129 Hamburg (DE)
(74) Representative: Airbus Germany

(57) **Abstract**

Provided is a cabin management device (10) for an aircraft cabin space. The device comprises a sensor (12); a microcontroller (14), data-connected with the sensor (12); and an output (16), data-connected with the microcontroller (14). The sensor (12) is configured to collect a plurality of distance data across a predetermined part of the cabin space (30) at a plurality of points in time and to transmit the distance data to the microcontroller (14). The microcontroller (14) is configured to evaluate the distance data by a comparison of the distance data collected at one point in time with distance data collected at another point in time and to generate space-related data based on the comparison, and to transmit the space-related data to the output (16). And the output (16) is configured to provide information about a current spatial situation based on the transmitted space-related data.

## Description

### FIELD OF THE INVENTION

The present invention relates to managing and monitoring a space in an aircraft. In particular, the invention relates to a cabin management device for an aircraft cabin space, to a passenger service unit, to a cabin management system, to a use of the cabin management device, to an aircraft cabin, an aircraft and a method for monitoring and controlling an aircraft cabin space.

### BACKGROUND OF THE INVENTION

Aircraft cabin management systems relate to integrated systems that control and automate various cabin functions to enhance passenger comfort and simplify crew operations. These systems provide the backbone also for monitoring and controlling an aircraft space, such as a cabin, and for managing in-flight entertainment, lighting, temperature, seat adjustments, and communication features.

There is a constant need in aviation industries to offer improved devices for such aircraft management systems that can help save energy, weight and costs.

### SUMMARY OF THE INVENTION

It is an object of the invention to provide a cabin management device that helps to improve and simplify management of an aircraft cabin. The object of the present invention is solved by the subject-matter of the independent claims. Further embodiments are incorporated in the dependent claims. It should be noted that the following described aspects of the invention apply also for the passenger service unit for an aircraft cabin, for the cabin management system, for the use of the cabin management device, for the aircraft cabin, for the aircraft and for the method for monitoring and controlling an aircraft cabin space.

According to the invention, a cabin management device for an aircraft cabin space is provided. The device comprises a sensor; a microcontroller, data-connected with the sensor, and an output, data-connected with the microcontroller. The sensor is configured to collect a plurality of distance data across a predetermined part of the cabin space at a plurality of points in time and to transmit the distance data to the microcontroller. The microcontroller is configured to evaluate the distance data by a comparison of the distance data collected at one point in time with distance data collected at another point in time and to generate space-related data based on the comparison, and to transmit the space-related data to the output. And the output is configured to provide information about a current spatial situation based on the transmitted space-related data.

As an effect, a distance-based, data protection compliant monitoring can be provided.

A "cabin management device" may also be referred to as monitoring and control device for an aircraft cabin and can also be referred to as a cabin management system.

The term "aircraft cabin space" refers to any space in an aircraft, such as a cabin, a lavatory in a cabin, or the cockpit.

The term "sensor" refers to a sensor configured to scan a space or measure or determine distances to points, such as a Time-of-Flight sensor, for example a 3D-Time-of-Flight sensor.

The term "predetermined part of the cabin space" refers to an area where distance data are collected.

A "microcontroller" refers to a data processing unit and may also be referred to as a microprocessor or controller.

The term "space related data" refers to data representing a current spatial surface situation and may comprise a data field pattern comprising a sensor raw data matrix. The term "raw data matrix" refers to a matrix format of data that has not been processed or analyzed yet.

An "output" refers to data or signals the device produces, and may comprise a status information of detected items, such as, for example "seat occupied" or "tray table down", etc. The output may also be referred to as an output unit or an output interface. In an example, the output interface is data-connectable to an application server, which uses the output for further functional logic. In another example, the output is data-connected to a display.

According to an example, for each of the plurality of points in time, the microcontroller is configured to create a current data field pattern from the distance data representing a current spatial surface situation, and to compare the current data field pattern with a previously created data field pattern to determine change-values which indicate a spatial change.

The collected distance data at a point of time are used to create a raw data matrix in a data field pattern, wherein each matrix point indicates a measured distance to a surface. As a result, a three-dimensional representation of a surface can be created that can be compared with another representation of the same surface area.

The term "data field pattern" defines the structure of a dataset. The raw data matrix in the data field pattern contains the current or actual collected distance data following that structure. The raw data matrix may also be referred to as a sensor raw data matrix.

The term "change-values" relates to a deviation state of values and refers to differences or modifications in the collected distance data.

According to an example, the sensor is a Time-of-Flight sensor.

A Time-of-Flight sensor measures the distance between the sensor and an object by calculating the time it takes for a light pulse to travel to the object and back.

The measurement principle is based on the measurement of the transmission time of light pulses emitted by the sensor, reflected by the environment to be detected and captured again by the sensor. The temporal difference between the emission of the light pulse and the detection of its reflection on a light-sensitive sensor matrix can provide a three-dimensional image of the environment.

Thus, the sensor emits a signal in the form of a light pulse which reflects off an object or a surface and returns to the sensor. The sensor calculates the time difference between emission and reception, for example using the formula distance = (speed of light × time) / 2, to determine how far the object is.

The Time-of-Flight sensor may also be referred to as a 3D Time-of-Flight sensor. **In** an example, the Time-of-Flight sensor is installed in the passenger overhead area or in particular, in the passenger supply channel or the passenger service unit.

According to an example, the microcontroller runs a neural network algorithm to evaluate the sensor distance data to generate the space-related data.

In an aspect, the neural network can be trained to work with the raw data of the sensor.

Reference data may be provided from an initialization routine to get differences of the new data coming in and to give this information for training and analyzing reasons to neural network framework. In an example, the sensor can have a comparison built in to save energy and transmit distance data in case changes happen. According to an example, the output is configured to provide the information about a current spatial situation to a cabin management system.

As an effect, seat status monitoring assistance can be enabled and provided to the crew on a central display.

In an example, the information is integrated into a cabin management system or an aircraft open software platform.

According to an example, the output is connected to a matrix LED light or to a micro projector to provide a passenger reading light function.

As a further example, the output is connected to a loudspeaker unit to provide automatic acoustic messages.

As an effect, the microcontroller transmits the evaluated sensor distance data to other connected systems, such as a local entity for controlling lighting or projections or audio.

The combination and integration of a 3D time-of-flight sensor with a software steerable matrix LED light or micro projector may serve the purpose of an adaptive intelligent projection control. In this context, adaptive and intelligent refers to the capability to e.g. turn on the reading light, when a tray table is flipped down, disable seat projections, when a passenger is seated, activate ambient lighting scenarios.

As an example, the cabin management device substitutes classical reading lights.

According to an aspect, also a passenger service unit for an aircraft cabin is provided. The passenger service unit comprises at least one of the group of: a light source; a communication interface to provide information to a passenger; an air supply; a an oxygen supply; and an oxygen mask for a passenger; wherein also a cabin management device according to one of the preceding claims is integrated in the passenger service unit.

In an example, the output of the cabin management device is connected to a matrix LED light or to a micro projector to provide a passenger reading light function. Accordingly, the provision of reading light is included in the cabin management device and can be considered as a substitution of classic reading lights such that the light source can be omitted in the passenger service unit.

According to an aspect, also a cabin management system is provided comprising at least one passenger service unit as described above.

As an effect, by integration with the cabin management system or an aircraft Open Software Platform additional advanced use cases are feasible, like tray table projection of flight information, meal information, advertisement, etc. when the tray table is flipped down.

In another example, the post-processed 3D data of the sensor can be provided to the cabin management system, for example, to enable a cabin crew assistant monitor for seat occupancy and tray table states as a supplement to the prescribed manual cabin inspections. As an advantage, this may further improve safety in which the crew assists in compliance with safety standards.

According to an aspect, also a use of the cabin management device as described above is provided in an aircraft cabin.

The cabin management device can for example be used to determine a passenger related seating situation or to determine the tray table states in a seat row. The cabin management device may also be used in a lavatory of an aircraft cabin, in a cockpit or in the cargo hold.

As an advantage and as explained above, the seat status monitoring assistance for the crew is enabled which can further improve safety. Further, the passenger convenience can be enabled by adaptive lighting control. As a further effect, the cabin management device contributes to hygienic travel by less contact points for passenger, e.g. for turning on reading lights. In addition, the cabin management device may improve passenger experience through innovative intelligent lighting and projection, as indicated above. It may also improve digital airline branding and customization by intelligent seat, floor and tray table projection.

According to an aspect, also an aircraft cabin is provided comprising at least one cabin management system as described above and/or a passenger service unit as described above, and/or a cabin management device as described above.

According to a further aspect, an aircraft is provided, comprising an aircraft cabin as explained above.

According to another aspect, also a method for monitoring and controlling an aircraft cabin space is provided, comprising the following steps: providing a sensor; providing a microcontroller, data-connected with the sensor, and providing an output, data-connected with the microcontroller. The sensor is configured to collect a plurality of distance data across a predetermined part of the cabin space at a plurality of points in time and to transmit the distance data to the microcontroller. The microcontroller is configured to evaluate the distance data by a comparison of the distance data collected at one point in time with distance data collected at another point in time and to generate space-related data based on the comparison and to transmit the space-related data to the output. And the output is configured to provide information about a current spatial situation based on the transmitted space-related data.

In an aspect, the invention comprises a Time-of-flight sensor installed in the passenger overhead area, the Time-of-Flight sensor collecting distance data and being data-connected with a microcontroller running a neural network algorithm to evaluate the collected distance data. A data matrix is created where each matrix point indicates a measured distance to a surface. When an object in the sensor field of view, for example a passenger in the seat area, changes, this causes a change in the sensor raw data matrix created. The evaluation of the matrix raw data can be done by a neural network library, based on previously generated training data, to determine certain states, like "tray up/down", "passenger present/ unpresent" or "seat reclined/ upright". The microcontroller transmits the results via an output to other connected systems, such as a lighting or projection entity which reacts on the transmitted sensor data results.

Thus, a combination and integration of a 3D time-of-flight sensor with a software steerable matrix LED light or micro projector can be provided, for the purpose of adaptive intelligent projection control referring to the capability to e.g. turn on the reading light, when a tray table is flipped down, disable seat projections, when a passenger is seated, or activate ambient lighting scenarios.

In another aspect, the same post-processed 3D data of the sensor can be provided to the cabin management system to enable a cabin crew assistant monitor for seat occupancy and tray table states as a supplement to the prescribed manual cabin inspections. This may have potential to further improve safety in which the crew assists in compliance with safety standards.

The cabin management device comprising a Time-of-Flight sensor is much cheaper and lighter in comparison to a wired sensor cluster application to seat rows, also regarding installation. Its use also saves energy when no passenger is present on a seat by turning off monitors and lights.

These and other aspects of the present invention will become apparent from and be elucidated with reference to the embodiments described hereinafter.

### BRIEF DESCRIPTION OF THE DRAWINGS

The present invention will hereinafter be described in conjunction with the following figures, wherein like numerals denote like elements, and wherein:
Fig. 1 shows a schematic diagram of a cabin management device.
Fig. 2 schematically shows a front view and a top view of a cabin management device provided above a row of seats.
Fig. 3 schematically shows a cross-sectional view of an example of an arrangement of a cabin management device comprising a sensor and a sensor raw data matrix.
Fig. 4 schematically shows an example of a cabin management device.
Fig. 5 shows an example of an aircraft with a cabin management device provided in a cabin space.
Fig. 6 shows basic steps of an example of a method for monitoring and controlling an aircraft cabin space.

### DETAILED DESCRIPTION OF EMBODIMENTS

The representations and illustrations in the drawings are schematic and not to scale. A better understanding of the assembly, the arrangement and the method described above may be obtained through a review of the illustrations accompanying this application together with a review of the detailed description that follows.

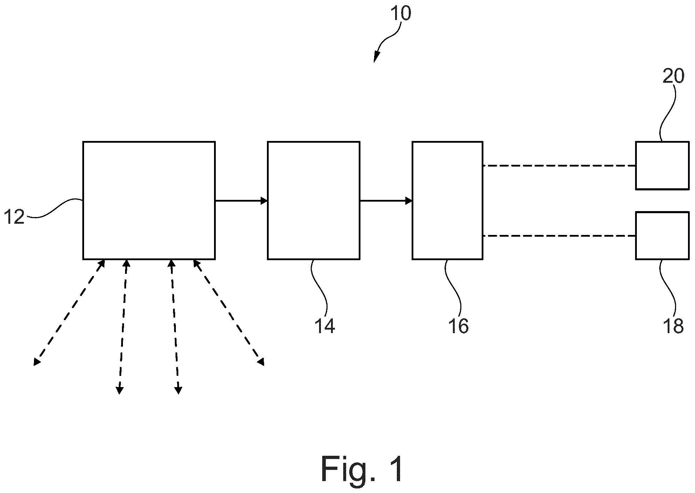

Fig. 1 shows a schematic diagram of a cabin management device 10. A sensor 12, such as a Time-of-Flight-sensor, collects a plurality of distance data by measuring the time it takes for a light signal, such as infrared laser or LED, to travel to an object or surface and reflect back to the sensor. The sensor 12 measures the time delay between emission and reception of the light signal and calculates the distance between the sensor and the object. A light pulse (pattern) is emitted by a light source, such as a laser/LED source, in a widely scattered manner and the ambient reflections of this individual pulse can be received by a matrix of light-sensitive sensors (also referred to as "matrix sensors"). The transit time of the emitted light pulse per matrix sensor field is then determined. The sensor 12 is data-connected with a microcontroller 14 which evaluates the distance data by comparing distance data collected by the sensor at one point in time with distance data collected by the sensor at a previous point in time. The microcontroller 14 generates space-related data based on the comparison and transmits the space-related data to the output 16 to which it is data-connected. The output 16 can be connected with a cabin management system 20. Alternatively, the output 16 can be connected directly with a lighting or projection entity 18. As an example, the output 16 is connected directly to a display, projection, lighting or audio device (what can be described as "standalone solution" - compared to a "systemintegrated solution" when the output is connected with the cabin management system), for example, in order to fulfill the desired function.

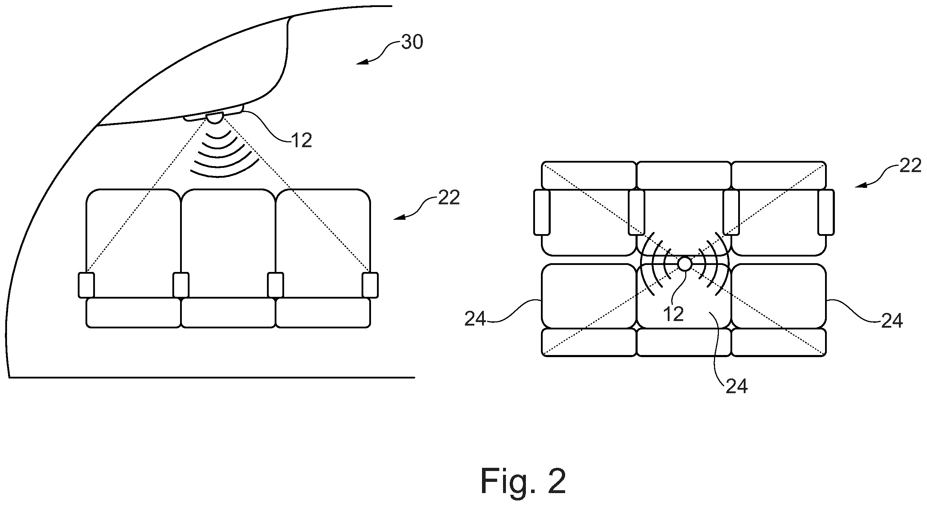

Fig. 2 schematically shows a front view (on the left) and a top view (on the right) of a cabin management device installed in the passenger overhead area. A sensor 12 of the cabin management device, which is data-connected with a microcontroller (not shown), is integrated in a passenger service unit above a row of passenger seats 22 in a cabin space 30 of an aircraft. The sensor 12 collects distance data across the predetermined area of one row of passenger seats 22. The schematic view from above (on the right) shows the predetermined area in which the distance data are collected being an area that extends over the seats, including the backrests, and over the trays 24 that are folded out in front of them, up to the back of the backrests of the adjacent row of seats.

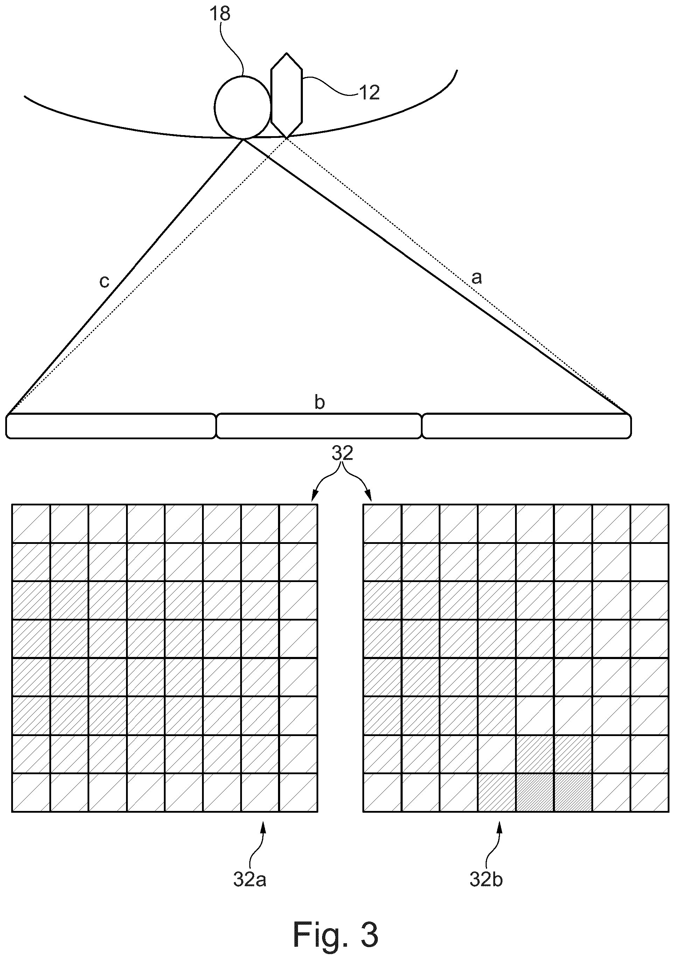

Fig. 3 schematically shows a cross-sectional view of an example of an arrangement of a cabin management device comprising a sensor, and generated sensor raw data matrix. A sensor 12, data-connected with a microcontroller (not shown) is connected via an output (also not shown) with a lighting or projection entity 18, all of which are integrated in a passenger service unit overhead the passenger seats. In an example, the application can also be included together with a display or loudspeaker (automatic "pager") to provide an automatic acoustic warning for "tray table down" during turbulence or landing approach. The sensor 12 collects a plurality of distance data across a predetermined area. The two sides c, a of the triangle abc show the area in which distance data are collected. b is an area in the cross-section whose surface is scanned and here amounts to three seats in a row of seats.

A sensor raw data matrix 32 is generated from sensor distance data collected at one point in time, wherein each matrix point indicates a measured distance from sensor 12 to the scanned surface point. The sensor raw data matrix 32a shows the matrix obtained when there is no passenger in the seat. The sensor raw data matrix 32b shows the matrix obtained when a passenger is present. (Darker shading indicates shorter measured distances from surface to sensor). Thus, a difference can be detected by comparing the two matrix data sheets 32a and 32b. In the next stage the evaluation of the whole matrix raw data is done by, for example a neural network 36, based on previously generated training data.

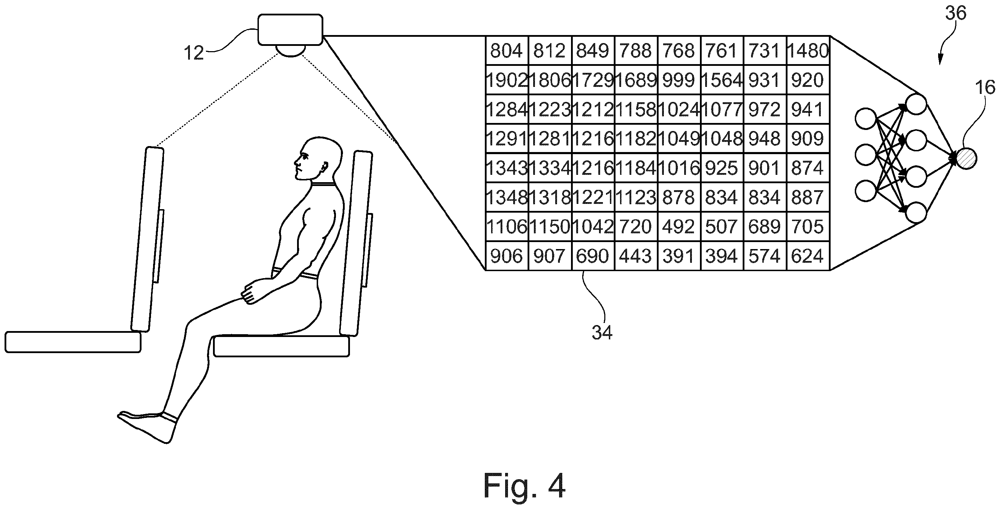

Fig. 4 shows a further schematic example of a cabin management device. The sensor 12 is data-connected with a microcontroller (not shown) and is integrated in a passenger service unit overhead the passenger seats. (In a side view, only two rows of seats are indicated here as examples, with one passenger sitting on a seat.)

The sensor collects a plurality of distance data across a predetermined part of the cabin space (here, a seat row in an aircraft cabin space) and transmits the distance data to the microcontroller which evaluates the distance data and generates sensor raw data matrices, as explained above with respect to Fig. 3. The evaluation of the whole matrix raw data 34 is done by a neural network 36 library, based on previously generated training data, to determine certain states like "tray up/down", "passenger present/ unpresent", "seat reclined/ upright". The evaluation result is transmitted to the output 16 and from the output 16 to a local entity (not shown) which can control the light and / or projection accordingly.

In another example, the evaluation result (for example "all trays up") can be further transmitted to the cabin management system to enable and provide seat status monitoring assistance to the crew on a central display (e.g. FAP).

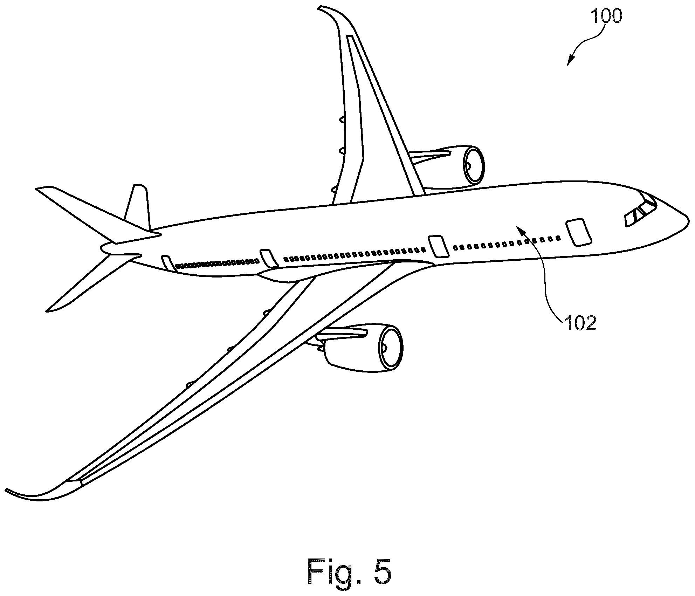

Fig. 5 shows an example of an aircraft 100 with a cabin management device provided in a cabin space 102 of the aircraft 100.

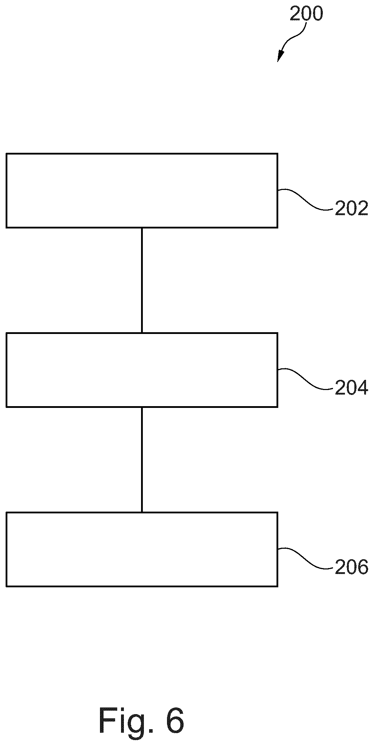

Fig. 6 shows basic steps of an example of a method 200 for monitoring and controlling an aircraft cabin space. The method 200 comprises the following steps: In a first step 202 a sensor is provided. In a second step 204 a microcontroller is provided, which is data-connected with the sensor. And in a third step 206 an output is provided, which is data-connected with the microcontroller, wherein the sensor is configured to collect a plurality of distance data across a predetermined part of the cabin space at a plurality of points in time and to transmit the distance data to the microcontroller, wherein the microcontroller is configured to evaluate the distance data by a comparison of the distance data collected at one point in time with distance data collected at another point in time and to generate space-related data based on the comparison and to transmit the space-related data to the output; and wherein the output is configured to provide information about a current spatial situation based on the transmitted space-related data.

### REFERENCE SIGNS

- 10: cabin management device
- 12: sensor
- 14: microcontroller
- 16: output
- 18: lighting/projection entity
- 20: cabin management system
- 22: row of passenger seats
- 24: tray
- 30: cabin space
- 32: sensor raw data matrix
- 32a: sensor raw data matrix only seat
- 32b: sensor raw data matrix with passenger seated
- 34: sensor raw data
- 36: neural network
- 100: aircraft
- 102: aircraft cabin
- 200: method

## Claims

1. A cabin management device (10) for an aircraft cabin space (30), the device comprising:
- a sensor (12);
- a microcontroller (14), data-connected with the sensor (12); and
- an output (16), data-connected with the microcontroller (14);
wherein the sensor (12) is configured to collect a plurality of distance data across a predetermined part of the cabin space (30) at a plurality of points in time and to transmit the distance data to the microcontroller (14);
wherein the microcontroller (14) is configured to evaluate the distance data by a comparison of the distance data collected at one point in time with distance data collected at another point in time and to generate space-related data based on the comparison, and to transmit the space-related data to the output (16); and
wherein the output (16) is configured to provide information about a current spatial situation based on the transmitted space-related data.

2. Cabin management device (10) according to claim 1, wherein, for each of the plurality of points in time, the microcontroller (14) is configured to create a current data field pattern from the distance data representing a current spatial surface situation, and to compare the current data field pattern with a previously created data field pattern to determine change-values which indicate a spatial change.

3. Cabin management device (10) according to claims 1 or 2, wherein the sensor (12) is a Time-of-Flight sensor.

4. Cabin management device (10) according to claims 1, 2 or 3, wherein the microcontroller (14) runs a neural network algorithm to evaluate the sensor distance data to generate the space-related data.

5. Cabin management device (10) according one of the preceding claims, wherein the output (16) is configured to provide the information about a current spatial situation to a cabin management system.

6. Cabin management device (10) according to one of the preceding claims, wherein the output (16) is connected to a matrix LED light or to a micro projector to provide a passenger reading light function.

7. A passenger service unit for an aircraft cabin, the passenger service unit comprising at least one of the group of:
- a light source;
- a communication interface to provide information to a passenger;
- an air supply;
- a an oxygen supply; and
- an oxygen mask for a passenger;
wherein also a cabin management device (10) according to one of the preceding claims is integrated in the passenger service unit.

8. A cabin management system comprising at least one passenger service unit according to claim 7.

9. Use of the cabin management device (10) according to claims 1 to 6 in an aircraft cabin.

10. An aircraft cabin comprising at least one cabin management system according to claim 8 and / or a passenger service unit according to claim 7 and / or a cabin management device (10) according to claims 1 to 6.

11. An aircraft (100) comprising an aircraft cabin according to claim 10.

12. A method (200) for monitoring and controlling an aircraft cabin space comprising the following steps:
- (202) providing a sensor;
- (204) providing a microcontroller, data-connected with the sensor; and
- (206) providing an output, data-connected with the microcontroller;
wherein the sensor is configured to collect a plurality of distance data across a predetermined part of the cabin space at a plurality of points in time and to transmit the distance data to the microcontroller;
wherein the microcontroller is configured to evaluate the distance data by a comparison of the distance data collected at one point in time with distance data collected at another point in time and to generate space-related data based on the comparison and to transmit the space-related data to the output; and
wherein the output is configured to provide information about a current spatial situation based on the transmitted space-related data.
